# EUROPEAN PATENT APPLICATION

(11) **EP 2 469 197 A1**
(43) Date of publication of application: **27.06.2012**
(21) Application number: 10818730.3
(22) Date of filing: 15.09.2010
(51) Int. Cl.: F24H 1/18, F24H 1/00, F24H 9/00

(54) **HOT WATER SUPPLY SYSTEM**

(30) Priority: 28.09.2009 JP 2009222336
(71) Applicant: Sanden Corporation, Isesaki-shi, Gunma 372-8502 (JP)
(72) Inventor: HIJI Yusuke, Isesaki-shi Gunma 372-8502 (JP); TODOKORO Miho, Isesaki-shi Gunma 372-8502 (JP); MURAKOSHI Yasushi, Isesaki-shi Gunma 372-8502 (JP); KADO Hirotaka, Isesaki-shi Gunma 372-8502 (JP); ISHII Syou, Isesaki-shi Gunma 372-8502 (JP); KAMIOKA Hideyasu, Isesaki-shi Gunma 372-8502 (JP)
(74) Representative: Prüfer & Partner GbR European Patent Attorneys
(86) International application number: PCT/JP2010/065949
(87) International publication number: WO 2011/037055

(57) **Abstract**

[Summary]

[Purpose] To provide a hot-water supply system which can suppress formation of scale in a water passage in a heat exchanger, thereby easily and reliably preventing the water passage from clogging, thereby reducing running costs and increasing thermal efficiency.

[Solution] A hot-water supply system (1, 48, 54, 58, 66) designed to conduct a boiling operation to boil, or heat low-temperature water, flowing along a water circulation path (9) passing through a hot-water storage tank (6), to an output hot-water temperature set in advance, by means of a high-temperature refrigerant flowing along a refrigerant circulation path (5) comprises a heat exchanger (2) having a refrigerant passage (2a) and a water passage (2b) into which the high-temperature refrigerant and the low-temperature water are forced to flow by the boiling operation, respectively, and a scale formation suppressing means (38) for adding an additive (37) to the low-temperature water, when the low-temperature water is made to flow through the scale formation suppressing means, thereby suppressing formation of scale in the water passage (2), the scale formation suppressing means (38) being arranged in the water circulation path (9), after the hot-water storage tank (6) and before the water passage (2b) as viewed in the direction of flow of the low-temperature water.

## Description

### Technical Field

This invention relates to a hot-water supply system, specifically a hot-water supply system configured to boil water by means of a heat exchanger in a heating unit.

### Background Art

Hot-water supply systems of this type, broad use of which has been being encouraged for the purpose of energy saving and reduction of burden on the global environment, comprise a gas cooler (heat exchanger) arranged to boil water, flowing along a water circulation path of a tank unit passing through a hot-water storage tank, by means of a high-temperature refrigerant flowing along a refrigerant circulation path of a heat pump unit (heating unit).

The gas cooler has a refrigerant passage and a water passage into which the high-temperature refrigerant and water are forced to flow, respectively. It is known that scale containing calcium carbonate as a main constituent is deposited and stuck to the water passage, thereby clogging the water passage.

In order to remove such scale, patent document 1 discloses a storage-type hot-water supply apparatus comprising a water purification means including a removing means for removing organic matter, minerals, chlorine and the like from water, such as activated carbon, a hollow-fiber membrane filter or ion-exchange resin. This water purification means prevents minerals from being deposited to form scale in a heat-release heat exchanger arranged in a water circulation path as a result of a high-temperature refrigerant heating water to temperature not allowing the minerals to be dissolved in water in the heat-release heat exchanger.

Patent document 2 discloses a technique in which when scale is stuck to a fluid heating device, a fluid is ceased to circulate via a bath by opening a bypass passage, the fluid heating device is subjected to no-water burning or boiling to cause scale to exfoliate from the inner surface of metal piping, and the scale exfoliated is removed by means of a filter or the like.

Patent document 3 discloses a heat-pump hot-water supply machine comprising a clogging detection means which monitors the flow rate of water circulating along a water circulation path to detect clogging of the water circulation path, and an unclogging means which forces water to flow through the water circulation path at a maximum flow rate by applying increased pressure, to unclog the water circulation path.

### Prior-art Document

### Patent Document

Patent document 1: Japanese Patent Application Laid-open No. 2008-157517 Publication
Patent document 2: Japanese Patent Application Laid-open No. Hei 7-324806 Publication
Patent document 3: Japanese Patent Application Laid-open No. 2004-144445 Publication

### Summary of the Invention

### Problem to be Solved by the Invention

It is however difficult to remove scale once deposited and stuck to the water passage by the technique disclosed in patent document 1. Further, it is not easy to exfoliate hard scale deposited and firmly stuck to the water passage by no-water burning or boiling as disclosed in patent document 2 or by passing water under increased pressure as disclosed in patent document 3. Further, no-water burning or boiling or passing water under increased pressure requires the hot-water supply system to have an additional operation mode and additional equipment, which complicates the configuration of the hot-water supply system.

Furthermore, although the apparatus disclosed in patent document 1 has an access cover to enable replacement and maintenance of the removing means included in the water purification means, the removing means, through which water is always being passed, has short life, requires frequent replacement and maintenance, and thus, incurs replacement and maintenance costs, resulting in increased running costs of the hot-water supply system.

The present invention has been made in consideration of problems as mentioned above. An object of the present invention is to provide a hot-water supply system which can suppress formation of scale in a water passage in a heat exchanger, thereby easily and reliably preventing the water passage from clogging, thereby reducing running costs and increasing thermal efficiency.

### Means for Solving the Problem

In order to achieve the above object, the invention recited in claim 1 is a hot-water supply system designed to conduct a boiling operation to boil, or heat low-temperature water, flowing along a water circulation path of a tank unit passing through a hot-water storage tank, to an output hot-water temperature set in advance, by means of a high-temperature refrigerant flowing along a refrigerant circulation path of a heating unit, comprising a heat exchanger having a refrigerant passage and a water passage into which the high-temperature refrigerant and the low-temperature water are forced to flow by the boiling operation, respectively, and a scale formation suppressing means for adding an additive to the low-temperature water, when the low-temperature water is made to flow through the scale formation suppressing means, thereby suppressing formation of scale in the water passage, the scale formation suppressing means being arranged in the water circulation path, after the hot-water storage tank and before the water passage as viewed in the direction of flow of the low-temperature water.

An invention recited in claim 2 is a hot-water supply system of the type recited in claim 1, further comprising a bypass passage enabling the low-temperature water to bypass the scale formation suppressing means and then flow through the water passage, and a first flow-route switch means for switching between a flow route through the bypass passage and a flow route through the scale formation suppressing means, wherein the hot-water supply system conducts a scale formation suppressing operation with the flow route through the scale formation suppressing means being established by the first flow-route switch means, in place of the flow route through the bypass passage, to make the low-temperature water flow through the scale formation suppressing means.

An invention recited in claim 3 is a hot-water supply system of the type recited in claim 2, wherein the hot-water supply system conducts the scale formation suppressing operation at least either immediately before or immediately after conducting the boiling operation.

An invention recited in claim 4 is a hot-water supply system of the type recited in claim 2 or 3, further comprising a scale deposition detecting means for detecting scale deposited in the water passage, wherein the hot-water supply system conducts the scale formation suppressing operation when the scale deposition detecting means detects scale deposited.

An invention recited in claim 5 is a hot-water supply system of the type recited in claim 4, further comprising a water pump arranged in the water circulation path, after the hot-water storage tank and before the water passage as viewed in the direction of flow of the low-temperature water, wherein the scale deposition detecting means determines that scale is deposited in the water passage when rotating speed of the water pump is higher than or equal to a predetermined upper limit.

An invention recited in claim 6 is a hot-water supply system of the type recited in claim 4 or 5, further comprising a refrigerant temperature detecting means for detecting temperature of the high-temperature refrigerant flowing into the refrigerant passage, wherein the scale deposition detecting means determines that scale is deposited in the water passage when temperature detected by the refrigerant temperature detecting means is higher than or equal to a predetermined upper limit.

An invention recited in claim 7 is a hot-water supply system of the type recited in any of claims 2 to 6, further comprising a discharge passage joined to the water circulation path, after the water passage and before the hot-water storage tank as viewed in the direction of flow of the low-temperature water, and a second flow-route switch means for switching between a flow route through the water circulation path and a flow route through the discharge passage, wherein the hot-water supply system conducts the scale formation suppressing operation with the flow route through the discharge passage being established by the second flow-route switch means, in place of the flow route through the water circulation path, to make water flow through the discharge passage.

An invention recited in claim 8 is a hot-water supply system of the type recited in any of claims 2 to 7, further comprising a warning means for giving a warning about reduction or running-out of the additive if the scale deposition detecting means detects scale deposited in the water passage after the scale formation suppressing operation is conducted.

An invention recited in claim 9 is a hot-water supply system of the type recited in any of claims 1 to 8, wherein the additive contains polyphosphate as a main constituent, and the scale formation suppressing means is an addition device designed to allow polyphosphate to dissolve in the low-temperature water when the low-temperature water is made to flow through the addition device, thereby adding polyphosphate to the low-temperature water.

An invention recited in claim 10 is a hot-water supply system of the type recited in any of claims 1 to 9, wherein the heating unit is a heat pump unit.

### Effect of the Invention

In the hot-water supply system according to the present invention recited in claim 1, the scale formation suppressing means is arranged in the water circulation path, after the hot-water storage tank and before the water passage as viewed in the direction of flow of water. This makes it possible to add the additive to water, targeting only the water passage, efficiently, as compared with adding the additive in a water supply passage to the hot-water storage tank, for example, and thus, enables effective suppression of formation of scale in the water passage with a reduced amount of the additive added to the low-temperature water flowing through, and thus, easy and reliable prevention of clogging of the water passage. This reduces running costs and increases thermal efficiency of the hot-water supply system.

In the invention recited in claim 2, the scale formation suppressing operation is conducted with the flow route through the scale formation suppressing means being established by the first flow-route switch means, in place of the flow route through the bypass passage. This configuration makes it possible that the scale formation suppressing operation is conducted only when scale is deposited and stuck to the water passage, and thus, enables effective suppression of formation of scale in the water passage with a further reduced amount of the additive.

In the invention recited in claim 3, the scale formation suppressing operation is conducted at least either immediately before or immediately after conducting the boiling operation. If scale is deposited and stuck to the water passage, the scale formation suppressing operation conducted immediately before conducting the boiling operation can cause the scale to exfoliate from the water passage, thereby increasing thermal efficiency of the heater exchanger, and thus, of the hot-water supply system.

The environment in the water passage immediately after conducting the boiling operation is such that formation of scale is promoted due to high temperature. The scale formation suppressing operation conducted immediately after conducting the boiling operation can however efficiently suppress formation of scale in such environment, and thus, more reliably prevent the water passage from clogging.

In the invention recited in claim 4, the scale formation suppressing operation is conducted when the scale deposition detecting means detects scale deposited. This enables effective suppression of formation of scale in the water passage with a further reduced amount of the additive.

In the invention recited in claim 5, the scale deposition detecting means determines that scale is deposited in the water passage when rotating speed of the water pump is higher than or equal to a predetermined upper limit. Generally, the water pump is controlled to operate at higher rotating speed when higher output hot-water temperature is set. The scale deposition detecting means can however discover that the rotating speed of the water pump is abnormally high in view of the output hot-water temperature set for the boiling operation. This means that insufficient heat transfer in the heat exchanger can be detected from information about how the hot-water supply system is operating, and thus, enables reliable detection of the water passage being clogged with deposited scale.

In the invention recited in claim 6, the scale deposition detecting means determines that scale is deposited in the water passage when temperature detected by the refrigerant temperature detecting means is higher than or equal to a predetermined upper limit. The scale deposition detecting means can thus discover that the temperature of the high-temperature refrigerant heated in the heating unit is abnormally high in view of the output hot-water temperature set for the boiling operation. This means that insufficient heat transfer in the heat exchanger, which is the cause of the abnormally high temperature of the high-temperature refrigerant, can be detected from information about how the hot-water supply system is operating, and thus, enables reliable detection of the water passage being clogged with deposited scale.

In the invention recited in claim 7, the scale formation suppressing operation is conducted with the flow route through the discharge passage being established by the second flow-route switch means, in place of the flow route through the water circulation path, to make the water flow through the discharge passage. This enables the scale exfoliated from the water passage to be discharged from the water circulation path. As a result, the water circulating along the water circulation path is purified, leading to increased thermal efficiency of the heat exchanger, and thus, of the hot-water supply system.

The invention recited in claim 8 comprises a warning means for giving a warning about reduction or running-out of the additive to be added by the scale formation suppressing means if the scale deposition detecting means detects scale deposited in the water passage after the scale formation suppressing operation is conducted. This facilitates the additive replenishment management on the scale formation suppressing means, and makes the hot-water supply system more user-friendly. This also enables further automatization of the hot-water supply system, leading to a reduction in management and running costs of the hot-water supply system.

In the invention recited in claim 9, the scale formation suppressing means is an addition device designed to allow polyphosphate to dissolve in water when the water is made to flow through the addition device, thereby adding polyphosphate to the water. Polyphosphate has a deflocculation action, or action of deforming crystals of calcium carbonate, a main constituent of scale, thereby inhibiting growth of the crystals, and thus, preventing deposition and sticking of scale to the water passage. Polyphosphate can also remove hard scale deposited and firmly stuck to the water passage. In addition, since polyphosphate does not remove scale by dissolving but deforms the crystals of calcium carbonate, thereby making it unlikely that calcium carbonate forms scale, there is no concern that scale is deposited again by reverse reaction, which can happen when scale is removed by dissolving. Polyphosphate can thus reliably prevent the water passage from clogging.

In the invention recited in claim 10, the heating unit is specifically a heat pump unit.

### Brief Description of the Drawings

FIG. 1 is a diagram schematically showing the configuration of a first embodiment of hot-water supply system,
FIG. 2 is a vertical cross-sectional view of an addition device shown in FIG. 1,
FIG. 3 is a diagram schematically showing the configuration of a second embodiment of hot-water supply system,
FIG. 4 is a diagram schematically showing the configuration of a third embodiment of hot-water supply system,
FIG. 5 is a diagram schematically showing the configuration of a fourth embodiment of hot-water supply system, and
FIG. 6 is a diagram schematically showing the configuration of a fifth embodiment of hot-water supply system.

### Mode of Carrying out the Invention

Referring to the drawings attached, embodiments of the present invention will be described. First, a first embodiment will be described.

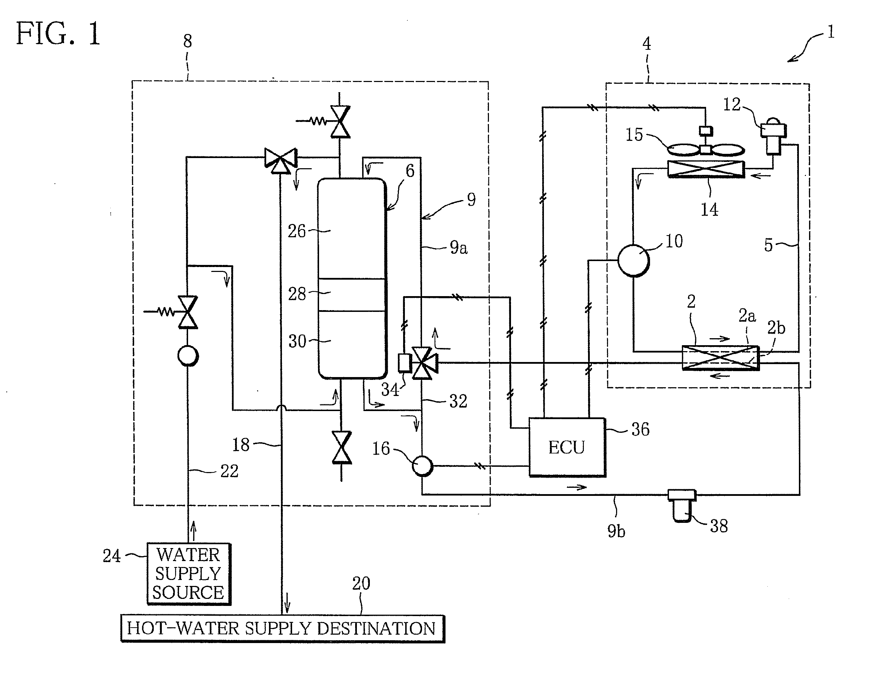

FIG. 1 schematically shows the configuration of a hot water supply system 1, a first embodiment of the present invention. The hot water supply system 1 comprises a heat pump unit (heating unit) 4 including a gas cooler (heat exchanger) 2 which boils, or heats water to an output hot-water temperature set in advance, by means of a high-temperature refrigerant, and a tank unit 8 including a hot-water storage tank 6 which holds hot water, or water boiled in the gas cooler 2.

The heat pump unit 4 has a refrigerant circulation path 5 along which CO₂ refrigerant circulates, with a compressor 10, the aforementioned gas cooler 2, an expansion valve 12 and an evaporator 14 arranged serially in the direction of flow of the refrigerant indicated by solid arrows to form a refrigeration cycle circuit.

The heat pump unit 4 is configured such that water from the hot-water storage tank 6 is boiled in the gas cooler 2 by transfer of heat from a high-temperature high-pressure gas refrigerant, or refrigerant having been compressed to a supercritical state by the compressor 10. The refrigerant liquefied as a result of transfer of heat, still at high temperature and high pressure, then undergoes adiabatic expansion when passing through the expansion valve 12. The resulting low-pressure low-temperature liquid-vapor refrigerant mixture is then evaporated, or turned into a low-temperature low-pressure gas refrigerant when passing though the evaporator 14, by a flow of ambient air created by a fan 15 associated with the evaporator. The refrigerant is then again compressed to the supercritical state by the compressor 10.

The gas cooler 2 is for example a tube-in-tube heat exchanger in which a refrigerant passage 2a constituting the refrigerant circulation path 5 extends inside a water passage 2b constituting a water circulation path 9, described later. The water flowing in the water passage 2b is boiled by the refrigerant flowing in the refrigerant passage 2a.

The tank unit 8 has a water circulation path 9 along which water circulates, with a water pump 16, the aforementioned gas cooler 2 and the aforementioned hot-water storage tank 6 arranged serially in the direction of flow of water indicated by solid arrows to form a water circuit.

To the top of the hot-water storage tank 6 is connected a high-temperature water passage 9a which constitutes the water circulation path 9, and in which high-temperature water, or water having passed through the water passage 2b of the gas cooler 2 flows. A hot-water supply passage 18 is also connected to the top of the hot-water storage tank 6. The hot-water supply passage 18 extends to a hot-water supply destination 20 (equipment with water supply, such as a bath, a shower, a kitchen or a washbasin) not included in the hot-water supply system 1.

To the bottom of the hot-water storage tank 6 is connected a low-temperature water passage 9b which constitutes the water circulation path 9, and in which low-temperature water, or water before passing through the water passage 2b of the gas cooler 2 flows. A water supply passage 22 is also connected to the bottom of the hot-water storage tank 6. The water supply passage 22 extends to a water supply source 24 (water tap or the like) not included in the hot-water supply system 1.

Into the hot-water storage tank 7 arranged as described above, high-temperature water at a specific temperature (70°C or so, for example), or water having been boiled in the gas cooler 2 flows from the top via the high-temperature water passage 9a, and low-temperature water at a specific temperature (15°C or so, for example), such as tap water, flows from the bottom via the water supply passage 22. As a result, inside the hot-water storage tank 6, there are formed a high-temperature water region 26, or layer of the high-temperature water, a mid-temperature water region 28, or layer of mid-temperature water, or water between specific temperatures (between 32°C and 37°C or so, for example) lower than the temperature of the high-temperature water and higher than the temperature of the low-temperature, and a low-temperature water region 30, or layer of the low-temperature water, in this order from the top.

Between the hot-water storage tank 6 and the water pump 16, the low-temperature water passage 9b is connected to the high-temperature water passage 9a by a connection passage 32. At the junction at which the high-temperature water passage 9a and the connection passage 32 are joined is arranged a three-way valve 34.

The three-way valve 34 can switch between a flow route through the high-temperature water passage 9a and a flow route through the connection passage 32 by changing the position of a valve element. With the flow route through the connection passage 32 being established, water can circulate along the water circulation path 9, bypassing the hot-water storage tank 6.

The hot-water supply system 1 includes an electronic control unit (ECU) 36 totally controlling the heat pump unit 4 and the tank unit 8. To the ECU 36, drive sections of the compressor 10, the fan 15, the water pump 16, the three-way valve 34 and others are electrically connected.

Next, how the hot-water supply system 1 configured as described above operates will be described.

Under learning control of the ECU 36, the hot-water supply system 1 conducts, on a regular basis, a boiling operation to boil the low-temperature water, circulating along the low-temperature water circulation path 9 of the tank unit 8 passing through the hot-water storage tank 6, by means of the hot-temperature refrigerant circulating along the refrigerant circulation path 5 of the heat pump unit 4, or in other words, turn the low-temperature water into hot-temperature water.

Specifically, the boiling operation is conducted such that, in the heat pump unit 4, the compressor 10 and the fan 15 are activated so that the high-temperature refrigerant, or refrigerant compressed by the compressor 10 flows into the refrigerant passage 2a, and in the tank unit 8, the water pump 16 is activated so that the low-temperature water is drawn from the low-temperature region 30 in the hot-water storage tank 6 and forced into the water passage 2a via the low-temperature water passage 9b.

In the boiling operation, the water pump 16 is controlled to operate at higher rotating speed when higher output hot-water temperature is set in advance by the user of the hot-water supply system 1. The low-temperature water flowing in the water passage 2b is heated to high temperature corresponding to the output hot-water temperature setting, by means of the high-temperature refrigerant flowing in the refrigerant passage 2a, where the environment in the water passage 2b becomes such that formation of scale containing calcium carbonate as a main constituent is promoted.

Specifically, calcium chloride (CaCl₂) and sodium hydrogen carbonate (NaHCO₃), contained in tap water, react to produce, as intermediate reaction products, sodium chloride (NaCl) and calcium hydrogen carbonate (CaCO₃), which in turn react to produce, as end products, carbon dioxide (CO₂), water (H₂O), sodium chloride (NaCl) and calcium carbonate (CaCO₃). These reactions are reversible.

In the water circulation path 9, after the hot-water storage tank 6 and before the water passage 2b as viewed in the direction of flow of water, or more specifically, in the low-temperature water passage 9b, between the water pump 16 and the water passage 2b is arranged an addition device (scale formation suppressing means) 38 designed to supply an additive 37 to the low-temperature water by allowing it to dissolve therein, thereby suppressing formation of scale in the water passage 2b.

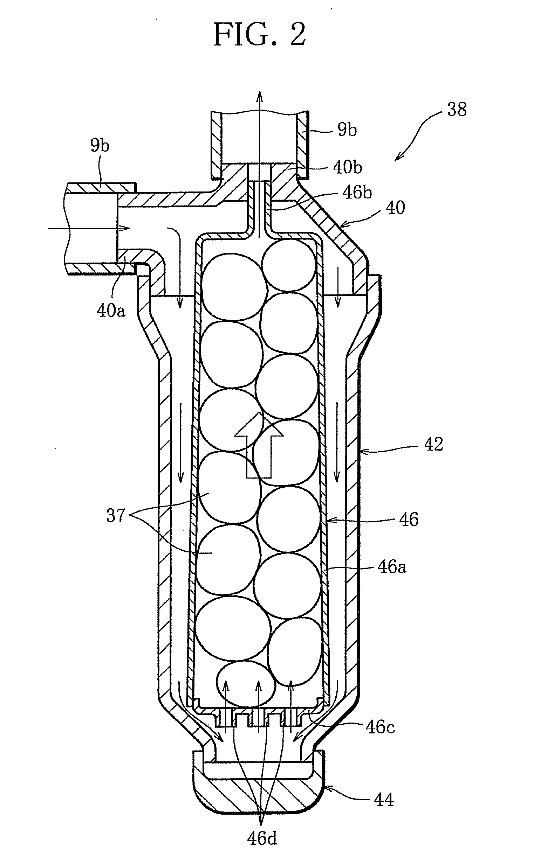

FIG. 2 shows a vertical cross-sectional view of the addition device 38. The addition device 38 comprises an upper cover 40 to which a pipe forming the low-temperature water passage 9b is connected, a cylindrical member 42 made of a transparent material such as plastic or glass, a lower cover 44, and a container 46 made of a transparent material such as plastic or glass in which the additive 37 is packed. The cylindrical member 42 and the container 46, both made of a transparent material, allow the user to check reduction or running-out of the additive 37 in the container 46 by eye.

The upper cover 40 and the lower cover 44 are air-tightly joined to an open top and an open bottom of the cylindrical member 42, respectively. The cylindrical member 42 is designed to allow the container 46 to be placed inside from the top at which the upper cover 40 is to be joined. The upper cover 40, the lower cover 44 and the container 46 are detachably attached to the cylindrical member 42.

The upper cover 40 has a lateral opening forming an inlet 40a for the low-temperature water to flow in, and a top opening forming an outlet 40b for the low-temperature water to flow out. Pipes forming the low-temperature water passage 9b are air-tightly joined to the inlet 40a and the outlet 40b, respectively.

The container 46 includes a cylindrical body portion 46a to be filled with the additive 37, an outlet 46b for the low-temperature water to flow out, extending upward from the top of the cylindrical body portion 46a with a reduced diameter compared with the cylindrical body portion, and an inlet 46d for the low-temperature water to flow in, consisting of a plurality of openings in a bottom cover 46c attached at the bottom of the cylindrical body portion 46a.

The outlet 46b of the container 46 is air-tightly joined to the outlet 40b of the upper cover 40. The bottom cover 46c is detachably attached to the cylindrical body portion 46a. With the bottom cover 46 detached, the additive 37 can be put in the container 36.

Here, the additive 37 in the form of spheres is packed in the container 46. More specifically, the additive 37 is in the form of white or transparent spheres 20mm or so in diameter and contains polyphosphate as a main constituent. The spheres of the additive 37 have a uniform surface area, resulting in a stable amount of the additive 37 dissolving in the low-temperature water. This facilitates concentration control, and reduces the pressure loss which the low-temperature water experiences when passing through the addition device.

Polyphosphate has a deflocculation action, or action of deforming crystals of calcium carbonate, a main constituent of scale, thereby inhibiting growth of the crystals, and thus, preventing deposition and sticking of scale to the water passage 2b. More specifically, polyphosphate changes rhombohedral crystals of calcium carbonate to spherical ones of smaller size, thereby preventing them from being deposited in the water passage 2b, and also gradually breaks up hard scale deposited and stuck to the water passage 2b. Thus, polyphosphate does not remove scale by dissolving but deforms the crystals of calcium carbonate, thereby making it unlikely that calcium carbonate forms scale.

As indicated by solid arrows in FIG. 2, from the low-temperature water passage 9b, the low-temperature water enters the addition device 38 configured as described above, through the inlet 40a. After flowing between the inner side surface of the cylindrical member 42 and the outer side surface of the cylindrical body portion 46a, the low-temperature water enters the cylindrical body portion 46a through the inlet 46d. The additive 37 dissolves in the low-temperature water as it passes through the cylindrical body portion 46a, and the low-temperature water with the additive 37 dissolved passes through the outlets 46a, 40b in this order and returns to the water passage 9b.

As described above, in the present embodiment, the addition device 38 is arranged in the low-temperature water passage 9b to add polyphosphate, a main constituent of the additive 37 to water by allowing it to dissolve in water as the water passes through the addition device. This makes it possible to add the additive 37 to water, targeting only the water passage 2b, efficiently, as compared with adding the additive 37 in the water supply passage 22 to the hot-water storage tank 6, for example, and thus, enables effective suppression of formation of scale in the water passage 2b with a reduced amount of the additive 37 added to the low-temperature water passing through, and thus, easy and reliable prevention of clogging of the water passage 2b. This reduces running costs and increases thermal efficiency of the hot-water supply system 1.

Polyphosphate has a deflocculation action, or action of deforming crystals of calcium carbonate, a main constituent of scale, thereby inhibiting growth of the crystals, and thus, preventing deposition and sticking of scale to the water passage 2b. Polyphosphate can also effectively remove hard scale deposited and firmly stuck to the water passage 2b. In addition, since polyphosphate does not remove scale by dissolving but deforms the crystals of calcium carbonate, thereby making it unlikely that calcium carbonate forms scale, there is no concern that scale is deposited again by reverse reaction, which can happen when scale is removed by dissolving. Polyphosphate can thus reliably prevent the water passage 2b from clogging.

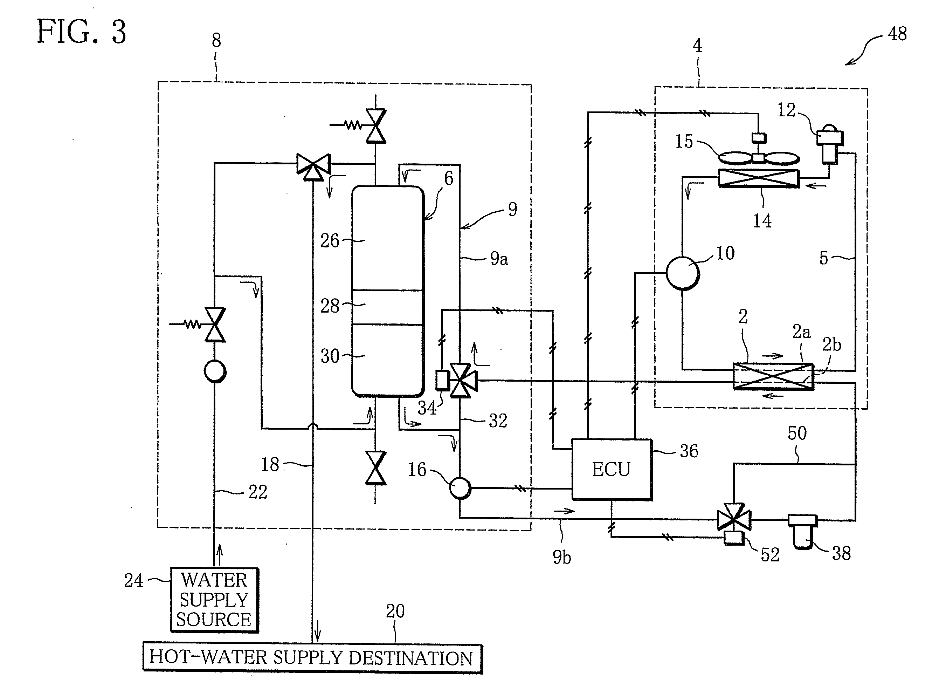

FIG. 3 schematically shows the configuration of a hot-water supply system 48, a second embodiment of the present invention. The same components as those of the above-described first-embodiment hot-water supply system 1 are denoted by the same reference characters; the description of those components will be omitted.

The hot-water supply system 48 comprises a bypass passage 50 diverging from the low-temperature water passage 9b, bypassing the addition device 38 and then joining the low-temperature water passage 9b. At a point at which the bypass passage 50 diverges from the low-temperature water passage 9b is arranged a three-way valve (first flow-route switch means) 52. The three-way valve 52 can switch between a flow route through the low-temperature water passage 9b and a flow route through the bypass passage 50 by changing the position of a valve element. With the flow route through the bypass passage 50 being established, water can circulate along the water circulation path 9, bypassing the addition device 38.

A drive section of the three-way valve 52 is electrically connected to the ECU 36. To conduct the scale formation suppressing operation, the ECU 36 changes the position of the valve element of the three-way valve 52 to switch from the flow route through the bypass passage 50 to the flow route through the addition device 38 to make water pass through the addition device (scale formation suppressing means).

Specifically, in the initial state of the hot-water supply system 48, the flow route through the bypass passage 50 is established, so that water does not pass through the addition device 38. Then, under learning control over the hot-water supply system 48, the scale formation suppressing operation is conducted from a predetermined time before conducting the boiling operation up to immediately before conducting the boiling operation, with the flow route through the addition device 38 being established by the three-way valve 52, in place of the flow route through the bypass passage 50, to make water pass through the addition device.

This hot-water supply system 48 is intended to cause scale, already deposited and stuck to the water passage 2b, to exfoliate from the water passage 2b by conducting the scale formation suppressing operation immediately before conducting the boiling operation, thereby increasing the thermal efficiency of the gas cooler 2, and thus, of the hot-water supply system 48.

The second embodiment may be modified such that the scale formation suppressing operation is conducted from immediately after conducting the boiling operation, for a predetermined period of time, or both immediately before and immediately after conducting the boiling operation, for a predetermined period of time, with the flow route through the addition device 38 being established by the three-way valve 52, in place of the flow route through the bypass passage 50, to make water pass through the addition device (scale formation suppressing means).

Immediately after conducting the boiling operation, the environment in the water passage 2b is such that formation of scale is promoted due to high temperature. Thus, this variant of the second embodiment is intended to effectively suppress formation of scale and more reliably prevent the water passage 2b from clogging, by conducting the scale formation suppressing operation immediately after conducting the boiling operation.

The second embodiment may also be modified such that the scale formation suppressing operation is conducted when the rotating speed of the water pump 16 (scale deposition detection means), set by the ECU 36, is higher than or equal to a predetermined upper limit, and thus, it is determined that scale is deposited in the water passage 2b (scale formation suppressing means).

This variant is intended to conduct the scale formation suppressing operation only when it is determined that scale is deposited, thereby effectively suppress formation of scale in the water passage 2b with a further reduced amount of the additive 37.

The water pump 16 is controlled to operate at higher rotating speed when higher output hot-water temperature is set. The above variant can however discover that the rotating speed of the water pump 16 is abnormally high in view of the output hot-water temperature set for the boiling operation. In other words, this variant can detect insufficient heat transfer in the gas cooler 2 from information about how the hot-water supply system 48 is operating, and thus, reliably detect the water passage 2b being clogged with deposited scale.

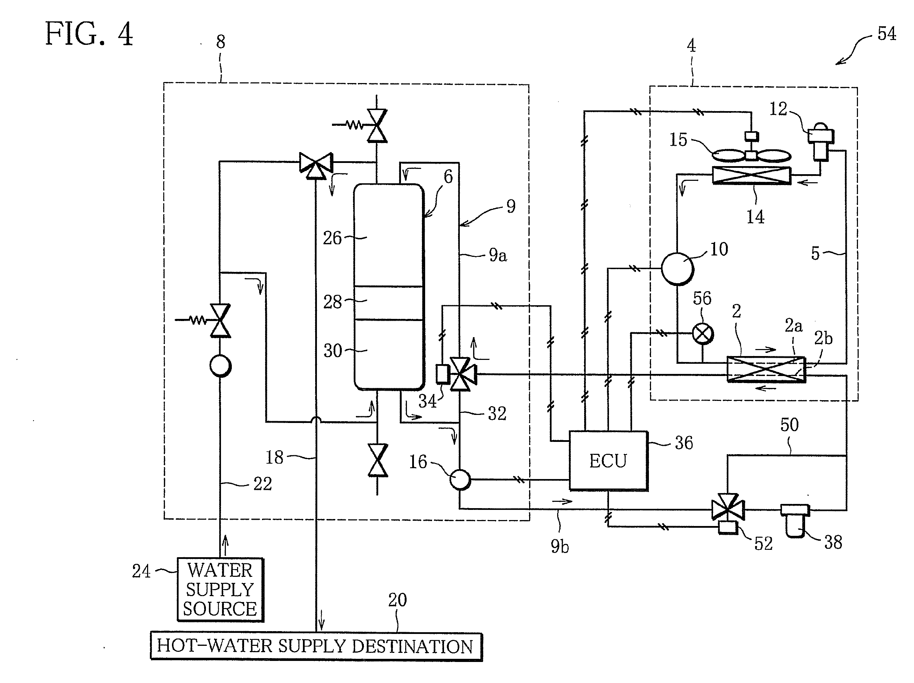

FIG. 4 schematically shows the configuration of a hot-water supply system 54, a third embodiment of the present invention. The same components as those of the above-described second-embodiment hot-water supply system 48 are denoted by the same reference characters; the description of those components will be omitted.

The hot-water supply system 54 comprises a refrigerant temperature sensor (refrigerant temperature detecting means, scale formation detecting means) 56 arranged in the refrigerant circulation path 5, between the compressor 10 and the gas cooler 2, to detect the temperature of high-temperature high-pressure gas refrigerant, or refrigerant having been compressed to a supercritical state by the compressor 10. An output terminal of the refrigerant temperature sensor 56, from which signal is transmitted, is electrically connected to the ECU 36. The ECU 36 conducts the scale formation suppressing operation depending on the refrigerant temperature detected by the refrigerant temperature sensor 56 (scale formation suppressing means).

Specifically, when the temperature of the high-temperature refrigerant, detected by the refrigerant temperature sensor 56, is higher than or equal to a predetermined upper limit, the ECU 36 determines that scale is deposited in the water passage 2b and conducts the scale formation suppressing operation.

The hot-water supply system 54 having a refrigerant temperature sensor 56 as a scale deposition detecting means can discover that the temperature of the high-temperature refrigerant heated in the heat pump unit 4 is abnormally high in view of the output hot-water temperature set for the boiling operation. In other words, the third embodiment can detect insufficient heat transfer in the gas cooler 2, which is the cause of the abnormally high temperature of the refrigerant, from information about how the hot-water supply system 48 is operating, specifically the refrigerant temperature, and thus, reliably detect the water passage 2b being clogged with deposited scale.

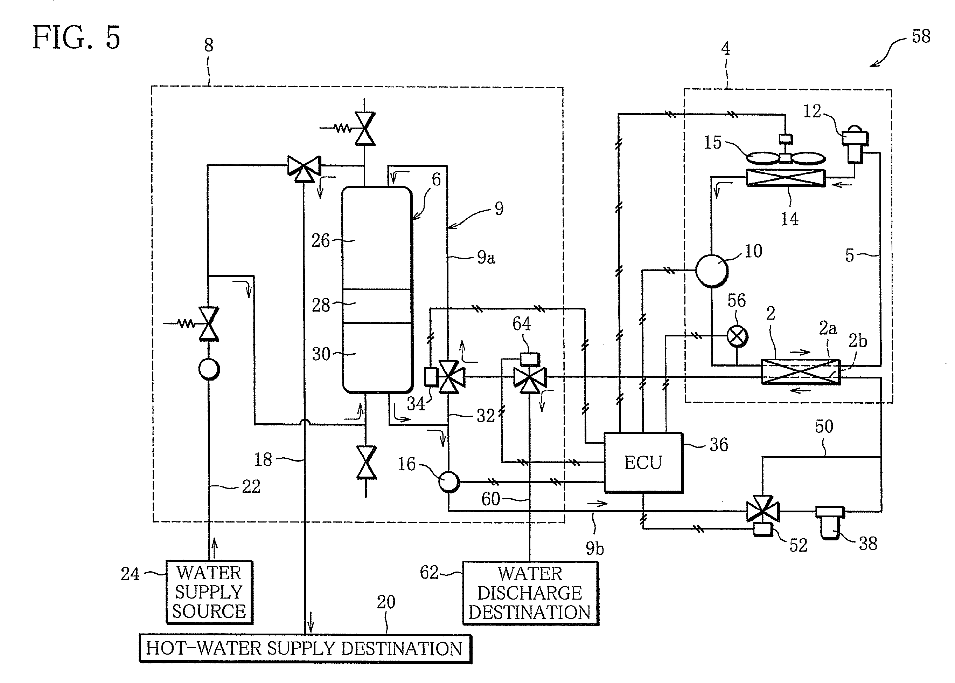

FIG. 5 schematically shows the configuration of a hot-water supply system 58, a fourth embodiment of the present invention. The same components as those of the above-described third-embodiment hot-water supply system 54 are denoted by the same reference characters; the description of those components will be omitted.

The hot-water supply system 58 comprises a discharge passage 60 connected to the high-temperature water passage 9a, between the water passage 2b and the three-way valve 34. The discharge passage 60 extends to a discharge destination 62 not included in the hot-water supply system 58. At a joint at which the high-temperature water passage 9a and the discharge passage 60 are joined is arranged a three-way valve (second flow-route switch means) 64. The three-way valve 64 can switch between a flow route through the high-temperature water passage 9a and a flow route through the discharge passage 60 by changing the position of a valve element. A drive section of the three-way valve 64 is electrically connected to the ECU 36.

In the fourth embodiment configured as described above, to conduct the scale formation suppressing operation, the ECU 36 changes the position of the valve element of the three-way valve 64 to switch from the flow route through the high-temperature water passage 9a to the flow route through the discharge passage 60 to make water pass through the discharge passage 60. As a result, scale exfoliated from the water passage 2b is discharged from the water circulation path 9, and thus, water circulating along the water circulation path 9 is purified. This further increases the thermal efficiency of the gas cooler 2, and thus, of the hot-water supply system 58.

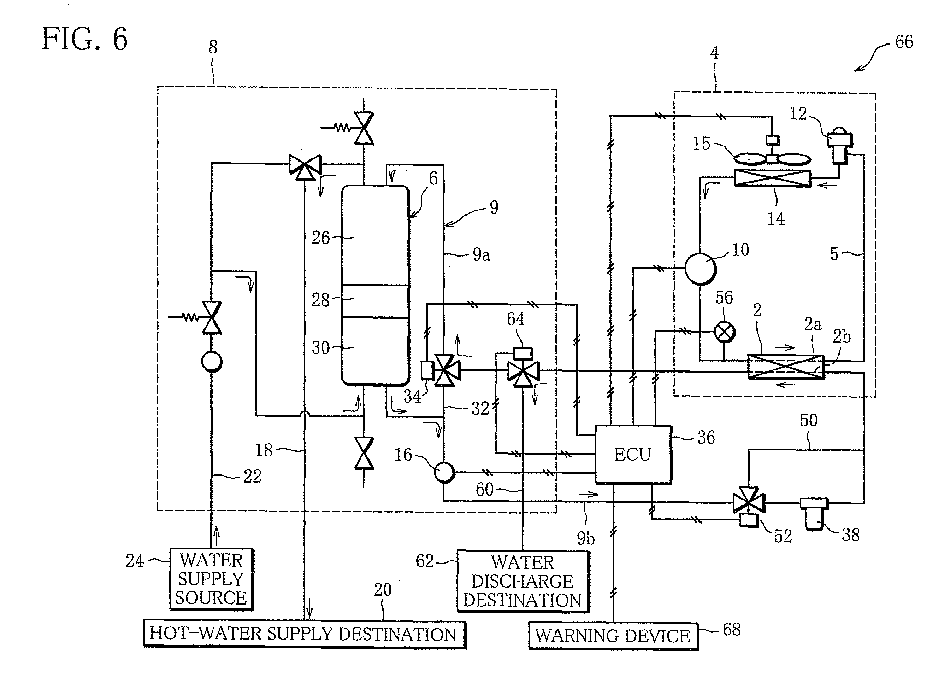

FIG. 6 schematically shows the configuration of a hot-water supply system 66, a fifth embodiment of the present invention. The same components as those of the above-described fourth-embodiment hot-water supply system 58 are denoted by the same reference characters; the description of those components will be omitted.

The hot-water supply system 66 comprises a warning device (warning means) sounding or displaying for the user of the hot-water supply system 66 a warning about reduction or running-out of the additive 37 in the addition device 38. The warning device 68 is electrically connected to the ECU 36. The warning device 68 determines that the additive 37 has reduced or run out if the scale deposition detecting means detects scale deposited in the water passage 2b after the scale formation suppressing operation is conducted, and gives a warning.

This facilitates the additive 37 replenishment management on the scale formation suppressing means, makes the hot-water supply system 66 far more user-friendly, and enables further automatization of the hot-water supply system 66, leading to a reduction in management and running costs of the hot-water supply system 66.

The present invention is not limited to the above-described first to fifth embodiments; they may be modified in various ways.

For example, the present invention is not limited to the configurations of the hot-water supply systems 1, 48, 54, 58 and 66. It goes without saying that if these hot-water supply systems are modified to have two tanks, namely a high-temperature tank and a low-temperature tank, they can enjoy the same advantages as described above.

The additive 37 is not limited to the one containing polyphosphate as a main constituent; any desired additive having the similar action may be used. The refrigerant is not limited to CO₂ gas. It is however preferable to use polyphosphate and CO₂ gas, since polyphosphate is known to be highly safe and CO₂ has low adverse impact on the global environment.

It goes without saying that the present invention is applicable not only to hot-water supply systems including a heat pump unit 4 as in the above-described systems 1, 48, 54, 58 and 66, but also hot-water supply systems including another type of heating unit, such as a gas-powered water heater or an electrical water heater.

### Explanation of the Reference Characters

- 1, 48 ,54, 58, 66: Hot-water supply system
- 2: Gas cooler (heat exchanger)
- 2a: Refrigerant passage
- 2b: Water passage
- 4: Heat pump unit (heating unit)
- 5: Refrigerant circulation path
- 6: Hot-water storage tank
- 8: Tank unit
- 9: Water circulation path
- 16: Water pump (scale deposition detecting means)
- 37: Additive
- 38: Addition device (scale formation suppressing means)
- 50: Bypass passage
- 52: Three-way valve (first flow-route switch means)
- 56: Refrigerant temperature sensor (refrigerant temperature detecting means, scale deposition detecting means)
- 60: Discharge passage
- 64: Three-way valve (second flow-route switch means)
- 68: Warning device (warning means)

## Claims

1. A hot-water supply system designed to conduct a boiling operation to boil, or heat low-temperature water, flowing along a water circulation path of a tank unit passing through a hot-water storage tank, to an output hot-water temperature set in advance, by means of a high-temperature refrigerant flowing along a refrigerant circulation path of a heating unit, comprising:
a heat exchanger having a refrigerant passage and a water passage into which the high-temperature refrigerant and the low-temperature water are forced to flow by said boiling operation, respectively, and
a scale formation suppressing means for adding an additive to the low-temperature water, when the low-temperature water is made to flow through the scale formation suppressing means, thereby suppressing formation of scale in the water passage,
the scale formation suppressing means being arranged in the water circulation path, after the hot-water storage tank and before the water passage as viewed in the direction of flow of the low-temperature water.

2. The hot-water supply system according to claim 1, further comprising
a bypass passage enabling the low-temperature water to bypass the scale formation suppressing means and then flow through the water passage, and
a first flow-route switch means for switching between a flow route through the bypass passage and a flow route through the scale formation suppressing means, wherein
the hot-water supply system conducts a scale formation suppressing operation with the flow route through the scale formation suppressing means being established by the first flow-route switch means, in place of the flow route through the bypass passage, to make the low-temperature water flow through the scale formation suppressing

3. The hot-water supply system according to claim 2, wherein the hot-water supply system conducts the scale formation suppressing operation at least either immediately before or immediately after conducting the boiling operation.

4. The hot-water supply system according to claim 2 or 3, further comprising:
a scale deposition detecting means for detecting scale deposited in the water passage, wherein
the hot-water supply system conducts the scale formation suppressing operation when the scale deposition detecting means detects scale deposited.

5. The hot-water supply system according to claim 4, further comprising:
a water pump arranged in the water circulation path, after the hot-water storage tank and before the water passage as viewed in the direction of flow of the low-temperature water, wherein
the scale deposition detecting means determines that scale is deposited in the water passage when rotating speed of the water pump is higher than or equal to a predetermined upper limit.

6. The hot-water supply system according to claim 4 or 5, further comprising:
a refrigerant temperature detecting means for detecting temperature of the high-temperature refrigerant flowing into the refrigerant passage, wherein
the scale deposition detecting means determines that scale is deposited in the water passage when temperature detected by the refrigerant temperature detecting means is higher than or equal to a predetermined upper limit.

7. The hot-water supply system according to any of claims 2 to 6, further comprising:
a discharge passage joined to the water circulation path, after the water passage and before the hot-water storage tank as viewed in the direction of flow of the low-temperature water, and
a second flow-route switch means for switching between a flow route through the water circulation path and a flow route through the discharge passage, wherein
the hot-water supply system conducts the scale formation suppressing operation with the flow route through the discharge passage being established by the second flow-route switch means, in place of the flow route through the water circulation path, to make water flow through the discharge passage.

8. The hot-water supply system according to any of claims 2 to 7, further comprising a warning means for giving a warning about reduction or running-out of the additive if the scale deposition detecting means detects scale deposited in the water passage after the scale formation suppressing operation is conducted.

9. The hot-water supply system according to any of claims 1 to 8, wherein
the additive contains polyphosphate as a main constituent, and
the scale formation suppressing means is an addition device designed to allow polyphosphate to dissolve in the low-temperature water when the low-temperature water is made to flow through the addition device, thereby adding polyphosphate to the low-temperature water.

10. The hot-water supply system according to any of claims 1 to 9, wherein the heating unit is a heat pump unit.
